# EUROPEAN PATENT SPECIFICATION

(11) **EP 4 246 273 B1**
(45) Date of publication and mention of the grant of the patent: **27.11.2024**
(21) Application number: 23160019.8
(22) Date of filing: 03.03.2023
(51) Int. Cl.: G05D 1/00, B60R 11/04, G01S 19/39

(54) **MODULAR SENSOR KIT FOR THE COLLECTION OF VEHICLE-RELATED DATA**
MODULARER SENSORSATZ ZUR ERFASSUNG VON FAHRZEUGBEZOGENEN DATEN
KIT DE CAPTEURS MODULAIRE POUR LA COLLECTE DE DONNÉES RELATIVES À UN VÉHICULE

(30) Priority: 14.03.2022 IT 202200004874
(43) Date of publication of application: 20.09.2023
(73) Proprietor: Toyota Material Handling Manufacturing Italy S.p.A, 40132 Bologna (IT)
(72) Inventor: Villa, Nunzio, 40132 Bologna (IT); Eusebi, Andrea, 40132 Bologna (IT); Bacchiani, Claudio, 40132 Bologna (IT); Mastroianni, Francesco, 40132 Bologna (IT)
(74) Representative: Hoffmann Eitle

(56) References cited:
- CN-U- 211 943 155

## Description

### TECHNICAL FIELD OF THE INVENTION

The field of the present invention concerns a modular sensor kit configured to be mounted on an industrial truck for the collection of operational data related to an environment of an industrial site in which the industrial truck operates during the collection.

### BACKGROUND OF THE INVENTION

Industrial trucks are well known in the art, for use e.g. in an industrial or logistic site for handling and transporting ware. Known types of industrial trucks include forklift trucks, towing tractors, tugger trains and the like.

There is currently a desire to provide industrial trucks with an autonomous driving function for a certain environment in which the industrial truck will operate. In order to assess whether an industrial truck may be provided with an autonomous driving function and to develop such an autonomous driving function, it is considered to mount a sensor kit on an existing manually-driven industrial truck for collecting data relating to the operation of the industrial truck in the given environment (such as an industrial site). The collected data may then be used to further assess the autonomous driving function.

However, industrial trucks can have substantially different shapes and dimensions, depending on the model of the industrial truck and also depending on the way of operating/configuring the truck, e.g. in association with different trailers and/or material handling devices. Considering for example a towing tractor, a different number of successive trailers can be towed by the towing tractor, this leading to considerably different lengths of the vehicle to be driven in the industrial site; accordingly, a sensor kit for data collection of the known art cannot properly collect the data of the industrial site in which the industrial truck operates, because e.g. optical sensors of the sensor kit may not be capable to sense the environment properly due to the variable configuration of the industrial truck. Hence, there is a need to develop a modular sensor kit suitable for the collection of environmental data that can be operated with a wide range of industrial trucks, regardless of possible different configurations of the industrial truck.

CN 211943155U discloses a multi-sensor fusion intelligent integrated vehicle, including a wire-controlled chassis vehicle, a sensor installation and adjustment platform, a perception system, a decision-making system, and a power supply.

### SUMMARY OF THE INVENTION

Accordingly, it is an object of the invention to provide a sensor kit suitable to properly collect operational data related to an environment of an industrial site in which an industrial truck operates, irrespective of the different configurations of the industrial truck on which the sensor kit is mounted. A further object of the invention is to provide a sensor kit that can be easily mounted on a variety of different industrial trucks.

In view of the above objects, the present invention proposes a sensor kit according to claim 1. In an aspect, the sensor kit is configured to be mounted on an industrial truck for the collection of operational data related to an environment of an industrial site in which the industrial truck operates during the collection,
the sensor kit comprising:
   - a frame provided with fastening means for connecting the frame to the industrial truck,
   - a plurality of sensors mounted on the frame for collecting the operational data,
   - a control unit connected to the sensors to receive the operational data from the sensors,
wherein the plurality of sensors includes at least:
   - a positioning sensor,
   - an inertial measurement unit, IMU, and
   - at least an optical sensor,
wherein the frame includes a main body for supporting the control unit and one or more adjustable elements configured to provide a plurality of different mounting positions with respect to the main body for at least one of the optical sensor and the positioning sensor.

### BRIEF DESCRIPTION OF THE DRAWINGS

The above and other advantages of the present invention will be illustrated with reference to an example embodiment of the invention, described with reference to the appended drawings listed as follows.
Fig. 1 shows a lateral view of an industrial truck according to the invention;
Fig. 2 shows a schematic view of the sensor kit according to the invention;
Fig. 3 shows an enlarged view of the industrial truck of figure 1 on which the sensor kit is mounted;
Fig. 4 shows a specific embodiment of the sensor kit;
Fig. 5 shows another view of the sensor kit of figure 4 with a different configuration of the sensor positions.

### DETAILED DESCRIPTION OF THE PREFERRED EMBODIMENTS

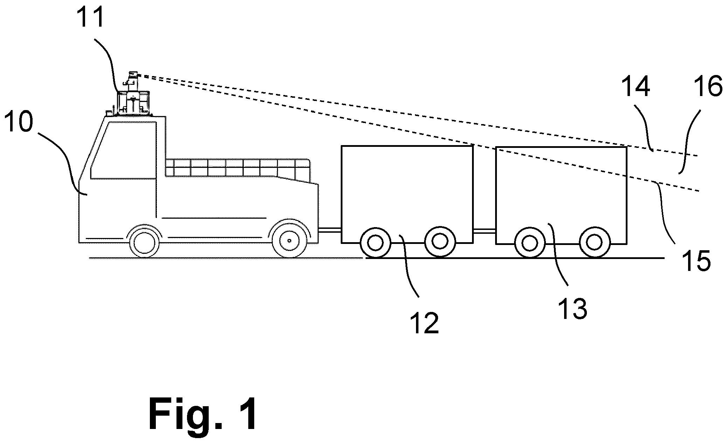

Fig. 1 shows an example of an industrial truck 10 on which a sensor kit according to the invention can be mounted. The industrial truck 10 is in the illustrated example a towing tractor configured to tow one or more trailers 12, 13. However, the sensor kit may be mounted also on other types of industrial trucks, such as a forklift truck or the like. The sensor kit 11 is preferably mounted on the roof of the industrial truck 10; however, also other mounting positions could be conceived. The sensor kit 11 is equipped with a plurality of sensors for collecting operational data related to an environment of an industrial site in which the industrial truck operates during the collection. In particular, the sensor kit includes optical sensors, such as a LIDAR, a camera, a stereo camera, an infrared sensor or the like, that collects operational data related to the environment around the industrial truck. Also other types of sensors may be used, in addition or in alternative to the optical sensors, such as radar and/or ultrasound sensors. As shown in figure 1, the boundary of the spatial field sensed by an optical sensor in the sensor kit 11 can vary depending on the configuration of the industrial truck; specifically, when only one trailer 12 is towed by the towing tractor 10, the boundary of the spatial field sensed by an optical sensor in the sensor kit 11 is represented by the dashed line 15; when two trailers 12, 13 are towed by the towing tractor 10, the boundary of the spatial field sensed by an optical sensor in the sensor kit 11 is represented by the dashed line 14. Accordingly, the space 16 between the two boundaries 14, 15 is sensed or not by the optical sensor depending on the different operational configurations of the industrial truck. Thus, the capacity of the sensor kit to collect properly operational data relating to the environment surrounding the industrial truck is highly variable depending on the configurations of the industrial truck.

In view of this finding, the present invention proposes a sensor kit 11 that is capable of properly collecting operational data irrespective of the possibly different configurations of the industrial truck.

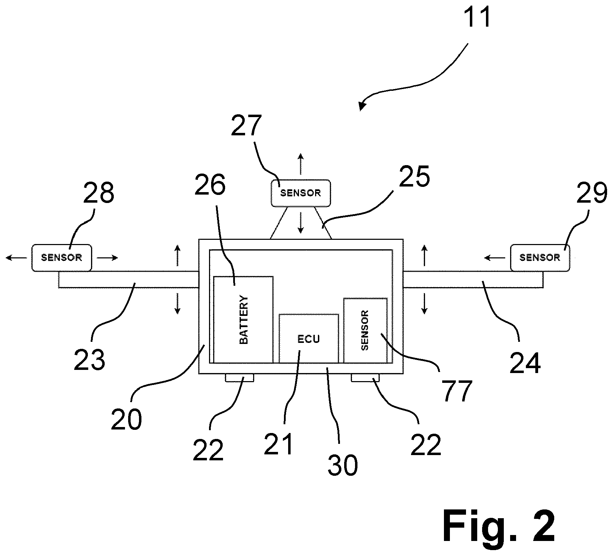

In more detail, as illustrated in figure 2, the sensor kit comprises:
- a frame provided with fastening means 22 for connecting the frame to the industrial truck,
   a plurality of sensors 27, 28, 29, 77 mounted on the frame for collecting the operational data, and
- a control unit 21 connected to the sensors to receive the operational data from the sensors. For example, the industrial truck may be a manually-driven industrial truck, i.e. an industrial truck without an autonomous driving function.

The control unit 21 is supported by a main body 20 of the frame. For example, the main body 20 may be a box-shaped structure and the control unit 21 may be mounted inside the main body 20. The control unit 21 may control the operation of the sensors. The control unit 21 e.g. may receive the operational data from the sensors and store them in a local memory. In an alternative embodiment, the control unit 21 might control the transmission of the operational data to a remote location by means of a transmitting unit of the sensor kit. Preferably, the frame is formed as a modular metal structure. The modular metal structure can be mounted on site by the final user, whereas the sensor kit can be disassembled to have a reduced size during shipping.

The plurality of sensors includes at least:
- a positioning sensor 28, 29,
- an inertial measurement unit, IMU, and
- at least an optical sensor 27, 34.

The positioning sensors can include one or more receivers, such as GSNN receivers 28, 29 or the like. The optical sensor can include one or more of a LIDAR (or LIDAR sensor), an infrared sensor, a camera or a stereo camera. The sensor kit may further include other types of sensors, such as a radar and/or an ultrasound sensor.

The frame includes a main body 20 for supporting the control unit 21 and one or more adjustable elements 23, 24, 25 configured to provide a plurality of different mounting positions with respect to the main body 20 for at least one of the optical sensor 27 and the positioning sensor 28, 29. Preferably, the adjustable elements are adjustable to vary the distance between at least two of the plurality of sensors. As shown by the arrows in figure 2, the sensor kits includes adjustable elements 23, 24, 25 supporting respective sensors 27, 28 and 29.

The adjustable elements 23, 24 are formed as lateral arms protruding laterally from opposite sides of the main body 20. The adjustable elements 23, 24 are configured to offer different mounting positions for a sensor in a horizontal direction, when the sensor kit is mounted on the industrial truck. The position of the lateral arms 23, 24 is also adjustable in a vertical direction with respect to the main body 20, so as to allow a vertical displacement of the respective sensors, when the sensor kit is mounted on the industrial truck.

The adjustable element 25 protrude substantially vertically above the main body 20. The adjustable element 25 is configured to offer different mounting positions for a sensor in a vertical direction, when the sensor kit is mounted on the industrial truck.

In a preferred embodiment, the two lateral arms 23, 24 support each a positioning sensor 28, 29, such as GNSS receiver or a GPS receiver. The adjustable element 25 supports a LIDAR 27 and optionally a camera or a stereo camera.

In figure 2 the main body 20 contains also a further sensor 77, such as IMU. The main body 20 contains preferably a battery 26 configured to supply power to the sensors and to the control unit 21 (such as an Electronic Control Unit, ECU). The sensor kit is provided with detachable fastening means, e.g. in the form of one or more magnets 22, to be fixed to the industrial truck, e.g. to the roof of a user cabin. Since the sensor kit is equipped with an independent battery 26, there is no need for connection to the power supply of the industrial truck, thus easing the mounting operation of the kit on the truck.

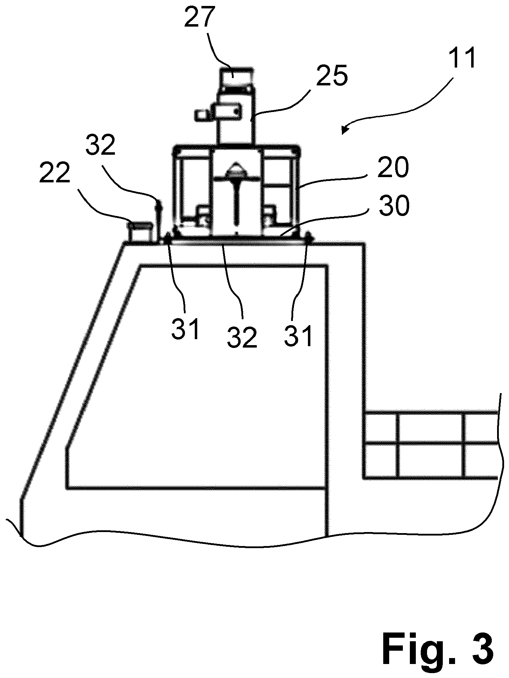

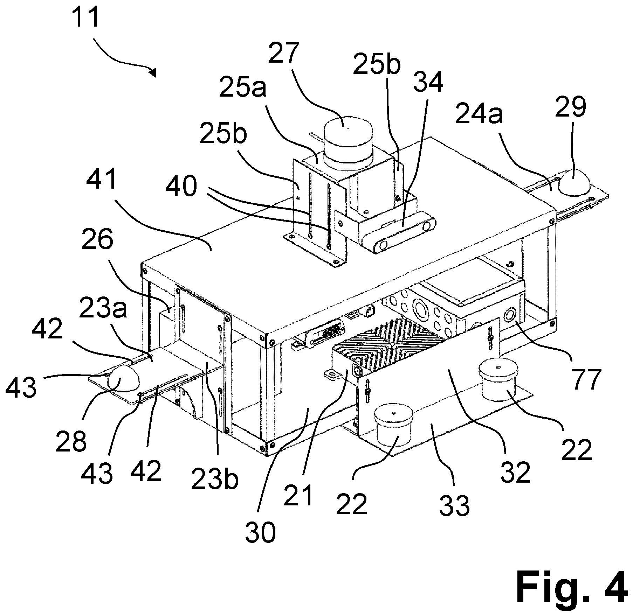

In figure 3 the sensor kit 11 is shown when mounted on the roof of an industrial truck, specifically on the mounting surface 32 of the industrial truck. The sensor kit 11 includes a plurality of spacers 31 mounted on a bottom wall 30 of the main body 20, for example four spacers 31 placed at the corners of the main body 20. The spacers have an adjustable length for adjusting the distance between the bottom wall 30 of the main body 20 and a mounting surface 32 of the industrial truck. The function of the adjustable spacers 31 is to ensure the possibility of mounting the sensor kit 11 in a correct desired position irrespective of the inclination and/or shape of the roof of the industrial truck. For example, a correct desired position of the sensor kit 11 may be a position in which the lateral arms 23, 24 are substantially horizontal, or a position in which the bottom wall 30 of the main body 20 is horizontal. A flange element 32, 33 (also well-illustrated in figure 4) is attached to a lateral wall of the main body 20 for supporting at least a magnet 22 spaced away from the bottom wall 30. The magnet 22 has the function of fixing the sensor kit to the mounting surface of the industrial truck. The position of the at least one magnet 22 is adjustable in a vertical direction with respect to the main body 20 of the frame; this allows to further improve the adaptability of the sensor kit to different shapes and inclinations of the mounting surface of the industrial truck.

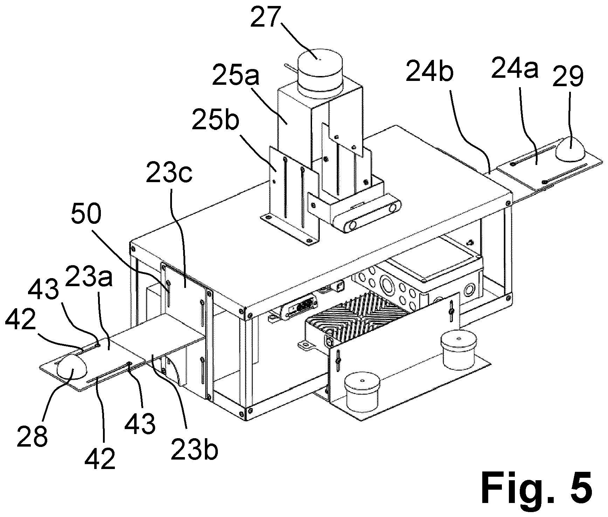

Referring to figures 4 and 5, a preferred embodiment of the invention includes two lateral extendible arms protruding from opposite sides of the main body, wherein each of the two lateral extendible arm supports a positioning sensor. The extendible arm 23 is composed by an inner component 23b and an outer component 23a. The extendible arm 24 is composed by an inner component 24b and an outer component 24a. The outer component 23a supports the sensor 28. The outer component 23a can be mounted in different positions with respect to the inner component 23b by means of the fastening elements 43 (e.g. two screws) inserted in respective elongated holes 42 formed in the outer element 23a. A similar arrangement is foreseen for the extension of the lateral arm 24a and 24b. Hence, the lateral arms 23, 24 have an adjustable length in a horizontal direction when the sensor kit is mounted on the industrial truck. Preferably, the sensors 28, 29 are mounted on the distal end of the arms 23, 24, specifically of the elements 23a, 24a. This allows to adapt the position of the respective sensor depending on the configuration of the truck and/or the kind of environment in which the data are to be collected. For example, the GNSS receivers 28, 29 mounted on the arms 23, 24 in configurations with multiple antennas can be positioned at distances from 1 m to 3 m in order to maximize signal quality and avoid interference with other sensors. However, the lateral arms could also be used to support an optical sensor, such as one or more cameras.

The inner components 23b and 24b of the lateral arms are also adjustable in the vertical direction with respect to the man body 20. As shown in figure 5, the height of the inner component 23b can be adjusted by means of the elongated holes 50 (or grooves) in which the fastening means is mounted (e.g. screws) to connect the component to the main body 20 of the frame. The same arrangement is foreseen for the other lateral arm 24.

As shown in the figure, the extendible tower 25 is configured to support at least one of the optical sensor and the positioning sensor, and the extendible tower 25 has an adjustable length in a vertical direction when the sensor kit is mounted on the industrial truck. The extendible tower 25 consists of an inner component 25b and an outer component 25a. The outer component 25a can be in the form of a C-shaped element. The inner component 25b can be in the form of a couple of vertical plates. The inner component 25b is fixed to the upper wall of the main body 20 of the sensor kit. The outer component 25a supports the optical sensor 27, e.g. a LIDAR. The inner component 25b can support a stereo camera 34. The inclination of the camera 34 can be adjusted by varying the mounting angle of the related supporting element with respect to the inner component 25b; this allows to properly direct the camera depending on the height of the mounting position on the industrial truck. The outer component 25a can be mounted with different vertical positions with respect to the inner component 25b so as to vary the position of the optical sensor 27. The adjustment is made possible thanks to the vertical grooves 40 formed in the inner element 25b in which the fastening means (e.g. a screw) is mounted. Thanks to the adjustable vertical position of the optical sensors, it is possible to adapt the position of the sensor depending on the different possible configurations of the industrial truck and of the environment, thus enabling a proper collection of the operational data irrespective of the configuration of the industrial truck.

In figure 4 the lateral arms and the vertical tower are shown in a retracted position, i.e. with the sensors 27, 28 and 29 as close as possible to the main body 20. In figure 5, the lateral arms and the vertical tower are shown in an extended position, i.e. with the sensors 27, 28 and 29 as far as possible from the main body 20.

The sensor kit further comprises a memory connected to the control unit 21 and configured for storing operational data collected by the plurality of sensors. The memory may be embedded in the ECU 21 or may be provided as external memory storage. Hence, the sensor kit is capable of collecting the operational data in a fully independent manner, without the need of an external power supply and/or the need of establishing a transmission channel for exporting the collected data in real time. Once the data collection is terminated (i.e. after a collection session in which the industrial truck operates with the sensor kit switched on and mounted on the truck), the sensor kit may be shipped back to the supplier and the operational data may be analysed, for example to assess whether an autonomous driving function can be applied to an industrial truck operating in the environment in which the data collection was performed. Furthermore, the collected operational data may be used to determine which type of sensor is particularly suitable for performing autonomous driving of an industrial truck in the referred environment. According to an alternative embodiment, the collected operational data may be extracted on site from the memory by means of a wired or wireless communication.

According to the invention, a transportable, independent sensor kit that can be installed on a wide variety of industrial trucks to collect data in new environments is provided. The kit consists of a removable and modular metal structure in which all the components can be fixed in a modular manner; in addition to the sensors, the other components in the kit are: an embedded PC (embodying the control unit), and a battery for power supply of all components on board. Furthermore, the system is not invasive in any way either for the vehicle or for the operator as it is mounted on the vehicle roof and does not require external power. The proposed sensor kit is a highly modular structure both from a structural point of view and for the sensors with which it can be equipped.

As shown above, in the frame of the sensor kit different mounting points have been provided for the sensors (depending on the visibility or reception needs of each component) which can be secured by means of fasteners based on screws or other known fastening systems. The two lateral arms are adjustable both in extension and in height; the box-shaped structure containing the battery and ECU can be kept open or made completely sealed (depending on the protection and insulation needs of the internal components). The sensor kit rests on a system of height-adjustable feet (or spacers), allowing installation even on a non-flat roof, while the magnets (which are also adjustable in height), on the other hand, ensure fastening.

The structural components of the sensor kit are fixed to each other through the use of screws and other fastening systems, which allow to easily disassemble the sensor kit and store it in a compact container, thus facilitating transport.

The system was designed to be able to accommodate a wide range of different sensors. In addition to these components, the sensor kit also houses the embedded board, the battery; the box-shaped body of the sensor kit contains the least resistant components.

The transportability of the system is guaranteed by the weight and small dimensions (weight less than 25 kg). Furthermore, it does not require an external power supply or any other interface with the outside and is therefore able to operate in total autonomy and can be installed on a wide variety of different vehicles thanks to a permanent or removable fixing.

The functioning of the sensor kit can be summarized as follows:
1. Sending the sensor kit to a target destination in a special case or container (during transport it is disassembled to reduce the overall dimensions)
2. Mounting the sensor kit on target vehicle
3. Launch data collection via graphic interface to which it is possible to connect remotely (Wifi / Bluetooth)
4. Data collection (operational capacity up to 12 consecutive hours)
5. Possible battery recharge through dedicated power supply
6. If necessary, carry out more data collection sessions repeated from point 3.

The proposed solution allows to obtain useful data to evaluate the possibility of using self-driving vehicles in the analyzed environments. The collected data can be used for the creation of datasets with the purpose of carrying out simulations and testing or development activities. Furthermore, it allows to evaluate which are the most effective sensors in the analyzed environments and to test and develop the algorithms based on the data collected through the kit, allowing an initial estimate of the results that can be obtained once the real vehicle is installed in the field.

As a data collection kit, the present invention can guarantee cost savings as it allows to accelerate the development of the autonomous driving system thanks to the real data to work on before the actual availability of a vehicle on site.

The above description of embodiments applying the innovative principles of the invention is provided solely for the purpose of illustrating said principles and must thus not be considered as limiting the scope of the invention claimed herein.

In an alternative embodiment, instead of fastening the sensor kit to the industrial truck by means of one or more permanent magnets, the fastening means may include one or more suction cups and/or other mechanical means suitable to engage with the roof of the industrial truck to fix the sensor kit thereto.

In a further alternative, the sensor kit may be formed in two parts. In this case, a first part of the sensor kit may include the main body of the frame on which the control unit is mounted and, possibly, one or more sensors are mounted. A second part of the kit sensor may support one or more of the plurality of sensors. Each of the first and second parts may include fastening means for fastening to the industrial truck. The first and second parts of the sensor kit can be mounted on the industrial truck with different distances from each other. Accordingly, the distance between the sensor(s) supported by the second part may be adjusted respect to the main body of the frame supporting the control unit. The control unit on the first part of the sensor kit may be communicably connected to the one or more sensors mounted on the second part of the sensor kit by means a flexible wire or by means of a wireless communication channel. In this embodiment, the second part embodies an adjustable element configured to provide a plurality of different mounting positions with respect to the main body for at least one of the optical sensor and the positioning sensor. In a further embodiment, the sensor kit may be formed in more than two parts.

## Claims

1. A sensor kit (11) configured to be mounted on an industrial truck (10) for the collection of operational data related to an environment of an industrial site in which the industrial truck operates during the collection,
the sensor kit comprising:
- a frame provided with fastening means (22) for connecting the frame to the industrial truck,
- a plurality of sensors (27, 28, 29, 77) mounted on the frame for collecting the operational data,
- a control unit (21) connected to the sensors to receive the operational data from the sensors,
wherein the plurality of sensors includes at least:
- a positioning sensor (28, 29),
and
- at least an optical sensor (27, 34),
wherein the frame includes a main body (20) for supporting the control unit (21) and one or more adjustable elements (23, 24, 25) configured to provide a plurality of different mounting positions with respect to the main body (20) for at least one of the optical sensor (27, 34) and the positioning sensor (28, 29),
the sensor kit (1) being **characterised in that** the adjustable elements comprise at least one lateral extendible arm (23) configured to support at least one of the optical sensor and the positioning sensor, the lateral arm having an adjustable length in an horizontal direction when the sensor kit is mounted on the industrial truck,
wherein the adjustable elements comprise two lateral extendible arms (23, 24) protruding from opposite sides of the main body, wherein each of the two lateral extendible arms supports a positioning sensor.

2. A sensor kit according to claim 1, wherein the optical sensor includes at least one of among a camera, a stereo camera (34), an infrared sensor and a LIDAR (34).

3. A sensor kit according to one of claims 1 or 2, wherein the adjustable elements comprise at least one extendible tower (25) configured to support at least one of the optical sensor and the positioning sensor, the extendible tower having an adjustable length in a vertical direction when the sensor kit is mounted on the industrial truck.

4. A sensor kit according to claim 3, wherein the extendible tower (25) supports a LIDAR (27).

5. A sensor kit according to one or more of the preceding claims, further comprising:
- a memory connected to the control unit and configured for storing operational data collected by the plurality of sensors, and/or
- a battery (26) for supplying power to the plurality of sensors and the control unit.

6. A sensor kit according to one of the preceding claims, wherein the main body (20) of the frame is box-shaped and contains at least the control unit (21) and, optionally, the memory and/or the battery (26).

7. A sensor kit according to any of claims 1-6, wherein the plurality of sensors includes an inertial measurement unit, IMU.

8. A sensor kit according to any of claims 1-7, wherein the sensor kit (11) is configured to be entirely mounted on a roof of the industrial truck.

9. A sensor kit according to any of claims 1-8, wherein the main body (20) is configured for supporting a plurality of adjustable elements (23, 24, 25) configured to provide a plurality of different mounting positions with respect to the main body (20) for the optical sensor (27, 34) and the positioning sensor (28, 29).

## Patentansprüche

1. Sensorsatz (11), der konfiguriert ist, an einem industriellen Lastkraftwagen (10) montiert zu sein, zur Sammlung von Betriebsdaten, die eine Umgebung eines industriellen Standorts betreffen, wo der industrielle Lastkraftwagen während der Sammlung betrieben wird,
wobei der Sensorsatz umfasst:
- einen Rahmen, der mit Befestigungsmitteln (22) bereitgestellt ist, zum Verbinden des Rahmens mit dem industriellen Lastkraftwagen,
- einer Vielzahl von Sensoren (27, 28, 29, 77), die auf dem Rahmen montiert sind, zur Sammlung der Betriebsdaten,
- eine Steuerungseinheit (21), die mit den Sensoren verbunden ist, um die Betriebsdaten von den Sensoren zu empfangen,
wobei der Rahmen einen Hauptkörper (23, 24, 25) zum Tragen der Steuerungseinheit (21) und eines oder mehrerer anpassbaren Elemente/s (23, 24, 25) umfasst, das/die konfiguriert ist/sind, eine Vielzahl von verschiedenen Montagepositionen bezüglich des Hauptkörpers (20) für mindestens einen von dem Optiksensor (27, 34) und dem Positionssensor (28, 29) bereitzustellen,
wobei der Sensorsatz (1) **dadurch gekennzeichnet ist, dass** die anpassbaren Elemente mindestens einen lateralen erweiterbaren Arm (23) umfassen, der konfiguriert ist, mindestens einen von dem Optiksensor und dem Positionssensor zu tragen, wobei der laterale Arm eine anpassbare Länge in einer horizontalen Richtung aufweist, wenn der Sensorsatz auf dem industriellen Lastkraftwagen montiert ist,
wobei die anpassbaren Elemente zwei laterale erweiterbare Arme (23, 24) umfassen, die von gegenüberliegenden Seiten des Hauptkörpers vorspringen, wobei jeder der lateralen erweiterbaren Armen einen Positionssensor tragen.

2. Sensorsatz nach Anspruch 1, wobei der Optiksensor mindestens eine von einer Kamera, einer Stereokamera (34), einem Infrarotsensor und einem LIDAR (34) umfasst.

3. Sensorsatz nach einem von Ansprüchen 1 oder 2, wobei die anpassbaren Elemente mindestens einen erweiterbaren Turm (35) umfassen, der konfiguriert ist, mindestens einen von dem Optiksensor und dem Positionssensor zu tragen, wobei der erweiterbare Turm eine anpassbare Länge in eine vertikale Richtung aufweist, wenn der Sensorsatz auf dem industriellen Lastkraftwagen montiert ist.

4. Sensorsatz nach Anspruch 3, wobei der erweiterbare Turm (25) ein LIDAR (27) trägt.

5. Sensorsatz nach einem der vorstehenden Ansprüche, ferner umfassend:
- einen Speicher, der mit der Steuerungseinheit verbunden ist und konfiguriert ist, durch die Vielzahl von Sensoren gesammelte Betriebsdaten zu speichern, und/oder
- eine Batterie (26), um Leistung an die Vielzahl von Sensoren und die Steuerungseinheit bereitzustellen.

6. Sensorsatz nach einem der vorstehenden Ansprüche, wobei der Hauptkörper (20) des Rahmens boxförmig ist und mindestens die Steuerungseinheit (21) und, optional, den Speicher und/oder die Batterie (26) umfasst.

7. Sensorsatz nach einem der Ansprüche 1-6, wobei die Vielzahl von Sensoren eine Trägheitsnavigationseinheit, IMU, umfasst.

8. Sensorsatz nach einem der Ansprüche 1-7, wobei der Sensorsatz (11) konfiguriert ist, vollständig auf dem Dach des industriellen Lastkraftwagens montiert zu sein.

9. Sensorsatz nach einem der Ansprüche 1-8, wobei der Hauptkörper (20) konfiguriert ist, eine Vielzahl von anpassbaren Elementen (23, 24, 25) zu tragen, die konfiguriert sind, eine Vielzahl von Montagepositionen bezüglich des Hauptkörpers (20) für den Optiksensor (27, 34) und den Positionssensor (28, 29) bereitzustellen.

## Revendications

1. Ensemble capteur (11) configuré pour être monté sur un chariot de manutention (10) pour la collecte de données opérationnelles liées à l'environnement d'un site industriel dans lequel le chariot de manutention fonctionne pendant la collecte,
l'ensemble capteur comprenant :
- un cadre pourvu de moyens de fixation (22) pour connecter le cadre au chariot de manutention,
- une pluralité de capteurs (27, 28, 29, 77) montés sur le cadre pour collecter les données opérationnelles,
- une unité de commande (21) connectée aux capteurs pour recevoir les données opérationnelles des capteurs,
dans lequel la pluralité de capteurs comporte au moins :
- un capteur de positionnement (28, 29),
et
- au moins un capteur optique (27, 34),
dans lequel le cadre comporte un corps principal (20) pour supporter l'unité de commande (21) et un ou plusieurs éléments réglables (23, 24, 25) configurés pour fournir une pluralité de différentes positions de montage par rapport au corps principal (20) pour au moins un parmi le capteur optique (27, 34) et le capteur de positionnement (28, 29),
l'ensemble capteur (1) étant **caractérisé en ce que**
les éléments réglables comprennent au moins un bras latéral extensible (23) configuré pour supporter au moins un parmi le capteur optique et le capteur de positionnement, le bras latéral ayant une longueur réglable dans une direction horizontale lorsque l'ensemble capteur est monté sur le chariot de manutention,
dans lequel les éléments réglables comprennent deux bras extensibles latéraux (23, 24) faisant saillie depuis des côtés opposés du corps principal, dans lequel chacun des deux bras extensibles latéraux supporte un capteur de positionnement.

2. Ensemble capteur selon la revendication 1, dans lequel le capteur optique comporte au moins un parmi une caméra, une caméra stéréo (34), un capteur infrarouge et un LIDAR (34).

3. Ensemble capteur selon l'une des revendications 1 ou 2, dans lequel les éléments réglables comprennent au moins une tour extensible (25) configurée pour supporter au moins un parmi le capteur optique et le capteur de positionnement, la tour extensible ayant une longueur réglable dans une direction verticale lorsque l'ensemble capteur est monté sur le chariot de manutention.

4. Ensemble capteur selon la revendication 3, dans lequel la tour extensible (25) supporte un LIDAR (27).

5. Ensemble capteur selon l'une des revendications précédentes, comprenant en outre :
- une mémoire connectée à l'unité de commande et configurée pour stocker des données opérationnelles collectées par la pluralité de capteurs, et/ou
- une batterie (26) pour alimenter en puissance la pluralité de capteurs et l'unité de commande.

6. Ensemble capteur selon l'une des revendications précédentes, dans lequel le corps principal (20) du cadre est en forme de boîte et contient au moins l'unité de commande (21), et facultativement la mémoire et/ou la batterie (26).

7. Ensemble capteur selon l'une des revendications 1 à 6, dans lequel la pluralité de capteurs comporte une unité de mesure inertielle, IMU.

8. Ensemble capteur selon l'une des revendications 1 à 7, dans lequel l'ensemble capteur (11) est configuré pour être entièrement monté sur un toit du chariot de manutention.

9. Ensemble capteur selon l'une des revendications 1 à 8, dans lequel le corps principal (20) est configuré pour supporter une pluralité d'éléments réglables (23, 24, 25) configurés pour fournir une pluralité de différentes positions de montage par rapport au corps principal (20) pour le capteur optique (27, 34) et le capteur de positionnement (28, 29).
